Europäisches Patentamt

European Patent Office

Office européen des brevets

(11) Publication number: **0 349 659**
**A1**

## (12) EUROPEAN PATENT APPLICATION

(21) Application number: **88110614.0**

(22) Date of filing: **02.07.88**

(51) Int. Cl.⁴: **B60C 29/00 , F16K 15/20**

(43) Date of publication of application:
**10.01.90 Bulletin 90/02**

(84) Designated Contracting States:
**AT DE ES FR NL**

(71) Applicant: **Beretta, Dante**
**Via Vittorio Veneto, 90**
**I-24040 Bonate Sotto (Bergamo)(IT)**

(72) Inventor: **Beretta, Dante**
**Via Vittorio Veneto, 90**
**I-24040 Bonate Sotto (Bergamo)(IT)**

(74) Representative: **Luksch, Giorgio, Dr.-Ing. et al**
**Ing. A. Giambrocono & C. S.r.l. Via Rosolino**
**Pilo, 19/b**
**I-20129 Milano(IT)**

(54) Multi-connection tubular fixing socket for cycle, motorcycle and motor vehicle tyre valves.

(57) This fixing socket for cycle, motorcycle and mo-
tor vehicle tyre valves is characterised by a valve
body connector which comprises both an internal
thread (6) and an external thread (E) so that it is able
to engage valve bodies of different design and at the
same time enable the external thread to exert a
gripping action on the end of inflation devices.

Fig. 5

EP 0 349 659 A1

## MULTI-CONNECTION TUBULAR FIXING SOCKET FOR CYCLE, MOTORCYCLE AND MOTOR VEHICLE TYRE VALVES

This invention relates to the field of bicycle, motorcycle and motor vehicle tyre valves.

The most commonly used tyre valves are those usually known as the Regina type (Figure 1), Sclaverand type (Figure 2), Wood type (Figure 3) and motorcycle type (Figure 4).

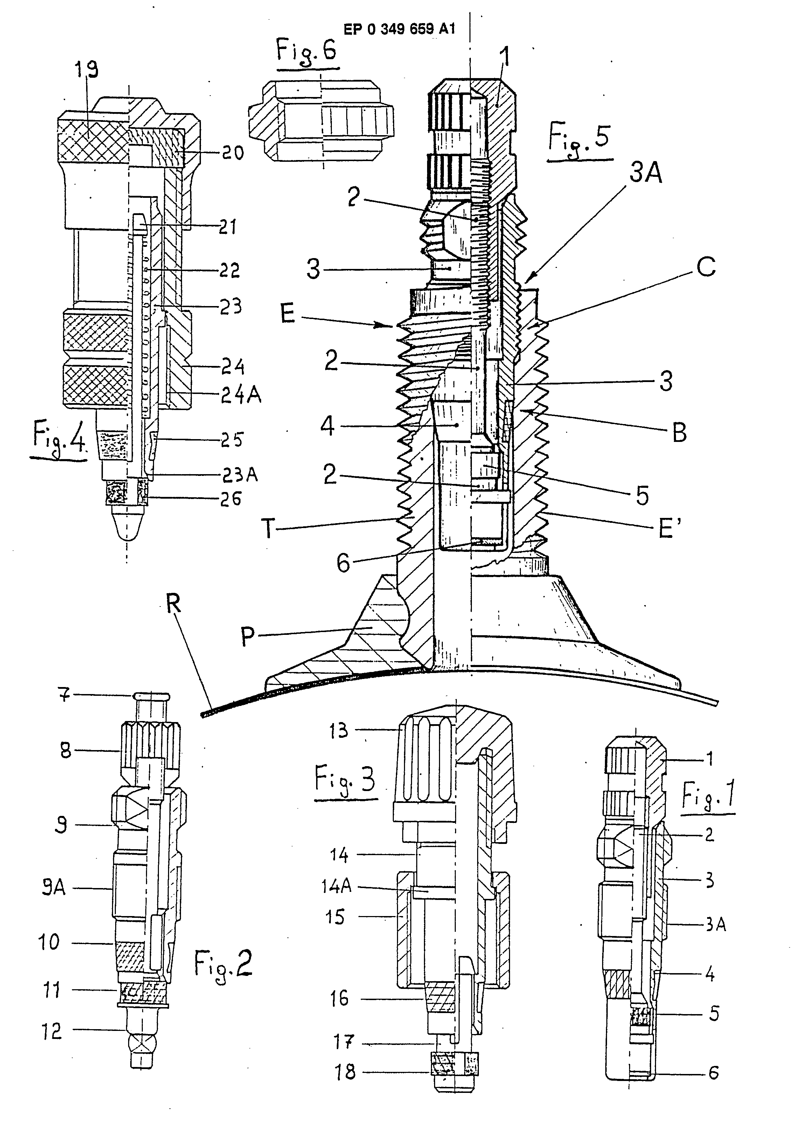

The first type (Figure 1) comprises a valve body formed from a containing member 3 provided with a seal gasket 4 which is squeezed against a corresponding edge B within its fixing socket T (Figure 4) when said member 4 is tightened by engaging its male thread 3A in a further conjugate thread C provided in the interior of said fixing socket T.

Said containing member 3 retains by means of its base 6 a threaded needle 2 provided with a gasket 5 for engaging against specific conical surfaces within said member 3 when pulled outwards by a female thread formed in a tightening cap 1.

The Sclaverand valve shown in Figure 2 operates in a similar manner. It comprises a valve body 9 provided with a thread 9A for engaging a fixing socket similar to the type T indicated in Figure 4 so as to form a seal against it by means of its gasket 10. The body 9 can itself be sealed by a gasket 11 provided on a needle 12 and pressed against a conical surface by operating a female-threaded cap 8 retained by an upset head 7 at the end of a thread on the needle 12.

In said Regina valve (Figure 1) and Sclaverand valve (Figure 2) the valve body 3, 9 is engaged with the fixing socket (T, Figure 4) by their external threads 3A, 9A, whereas in the case of the Wood valve the engagement is made differently by using a female or nut thread instead of a male thread 3A, 9A. This can be seen in Figure 3. In this, a containing member 14 is provided with edges 14A and a gasket 16 for forming a seal against the fixing socket (inner conical region B of the fixing socket T of Figure 4) in a manner similar to the gaskets 4 and 10 of the preceding valve types. However, its contact pressure is obtained not directly, as in the valves of Figures 1 and 2, but indirectly by using an intermediate clamping nut 15. This is screwed onto the outer end E of the fixing socket T.

The valve shown in Figure 4, known as a motorcycle valve as this generally represents its field of application, operates on a concept similar to said Wood valve. It comprises a containing member 24 with a female thread 24A for fixing it onto its fixing socket, of the type indicated by T in Figure 5, along its externally threaded part which is of the type indicated by E in Figure 5. The containing member 24 contains a valve body 23 which can be lowered into the fixing socket T together with the member 24 so that its gasket 25 engages a corresponding edge B. Within the valve body 23, a needle 21 urges its gasket 25 into contact with a conical edge 23A by the thrust exerted by a spring 22. The upper outer part of the containing member 24 is also threaded to be engaged by a cap provided with an inner gasket 20.

From the aforegoing it is apparent that conventional fixing sockets do not currently allow interchangeability of the aforesaid various types of valve usually in circulation.

This represents a certain drawback if a sudden valve fault requires the valve to be replaced in places where tyre repairers do not have that particular type of valve in stock and have only unsuitable types available. In such a case the entire tyre inner tube has to be replaced, involving considerably increased costs.

An object of the present invention is to provide a tubular fixing socket which can be used for all four said valve types, while at the same time still allowing proper retention of the rubber connection part of normal inflation hoses.

This and further objects will be found to have been attained on reading the following detailed description of a tubular fixing socket for the valves of cycle, motorcycle and motor vehicle tyres, characterised by a valve body connector which comprises both an internal thread and an external thread so that it is able to engage valve bodies of different design and at the same time enable the external thread to exert a gripping action on the rubber part at the end of normal inflation hoses.

The invention is illustrated by way of non-limiting example on the accompanying Figure 5, where said fixing socket T is shown together with a Regina valve (Figure 1) inserted in it in a sealed position.

The illustrated fixing socket is of the type comprising a rubber foot P which is bonded to the tyre R, but this aspect is not important as the socket could be fixed to the tyre by usual clamping nuts using the lower external thread $E'$. In this respect, said fixing socket could then be advantageously combined with known nuts having different cylindrical ends to make the valve suitable for wheel rims having different valve holes. This advantageous type of nut is shown in Figure 6. An important aspect is the simultaneous presence of both the external thread E and the internal thread C on the top of the fixing socket T. This combination then enables the valves of Figure 1 and Figure 2 to be mounted using the internal thread C, and the valves of the types shown in Figures 3 and 4 to be mounted by engaging the thread of the clamping nut 15 or of the containing member 24 with the external thread E of the fixing socket T. This obviously means that this thread must be of the same type as used for the clamping nut 15 and for said member 24. Said thread E can also be used to secure the fixing socket T to the bicycle, motorcycle or motor vehicle wheel rim by the known method if the thread is extended as far as its base region E$'$.

Thus this invention advantageously enables the wheel rim fixing thread to be also used for securing valve bodies of the Wood type (Figure 3) and of the motorcycle type (Figure 4). At the same time it also provides compatibility with the valves of Figures 1 and 2 by virtue of the presence of its internal thread C.

Finally, the fact that the thread E is also present at the free end advantageously overcomes the lack of the circumferential retention grooves usually provided on conventional fixing sockets to improve their forced fit on the rubber end of conventional inflation hoses.

## Claims

1. A tubular fixing socket (T) for cycle, motorcycle and motor vehicle tyre valves, characterised by a connector for the valve body (Figures 1, 2, 3, 4) which comprises both an internal thread (C) and an external thread (E, E$'$) so that it is able to engage valve bodies of different design and at the same time enable the external thread (E) to exert a gripping action on the rubber part at the end of normal inflation hoses.

2. A tubular fixing socket (T) for cycle, motorcycle and motor vehicle tyre valves as claimed in the preceding claim, characterised by an external thread (E) which is extended (E$'$) as far as the base to enable said tyre valve fixing socket to be locked to the wheel rim, including by the use of nuts with different cylindrical ends (Figure 6).

Fig.6

Fig.5

Fig.4

Fig.3

Fig.2

Fig.1

European Patent
Office

EUROPEAN SEARCH REPORT

Application Number

EP 88 11 0614

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 229 298 (BERETTA)<br>* Whole document *<br>--- | 1,2 | B 60 C 29/00<br>F 16 K 15/20 |
| X | FR-A-2 340 493 (BERETTA)<br>* Whole document *<br>--- | 1,2 | |
| X | US-A-4 462 449 (ZABEL)<br>* Claims; figures *<br>--- | 1 | |
| X | FR-A- 987 486 (MICHELIN)<br>* Whole document *<br>----- | 1 | |

TECHNICAL FIELDS
SEARCHED (Int. Cl.4)

B 60 C
F 16 K

The present search report has been drawn up for all claims

| Place of search | Date of completion of the search | Examiner |
|---|---|---|
| THE HAGUE | 23-02-1989 | PIRIOU J.C. |